# EUROPEAN PATENT SPECIFICATION

(11) **EP 1 538 723 B1**
(45) Date of publication and mention of the grant of the patent: **04.02.2009**
(21) Application number: 03293006.7
(22) Date of filing: 01.12.2003
(51) Int. Cl.: H02J 1/10

(54) **Apparatus for supplying a spacecraft power bus from a plurality of supplies**
Vorrichtung zur Energieversorgung eines Raumschiffbussystems mit mehreren Spannungsquellen
Dispositif d'alimentation pour un bus de puissance d'un véhicule spatial avec plusieurs alimentations

(43) Date of publication of application: 08.06.2005
(73) Proprietor: Alcatel Lucent, 75008 Paris (FR)
(72) Inventor: Liegeois, Bruno Ghislain, 5030 Gembloux (BE); Deplus, Nicolas Jean-Michaël, 7000 Mons (BE)
(74) Representative: Esselin, Sophie

(56) References cited:
- US-A- 5 814 903
- US-A- 5 874 786
- PEROL P: "Another look at the sequential switching shunt regulator" PROCEEDINGS OF THE FIFTH EUROPEAN SPACE POWER CONFERENCE, vol. 1, 1998, pages 79-84, XP009028861 Noordwijk, netherlands
- D. O'SULLIVAN AND A. WEINBURG: "The Sequential Switching Shunt Regulator S3R" PROCEEDINGS OF THE THIRD ESTEC SPACECRAFT POWER SEMINAR, 23 September 1977 (1977-09-23), pages 123-131, XP009020315 Noordwijk, Netherlands
- A. R. PATIL ET AL: "Design Considerations for a solar array switching unit" VIRGINIA POWER ELECTRONICS CENTER, 12 August 1990 (1990-08-12), pages 373-379, XP010301082 Virginia Polytechnic Institute and State University, Blacksburg VA USA

## Description

### Technical field:

The invention relates to a power supplying apparatus for supplying electrical power to the power bus of a spacecraft, comprising at least one power converting device shunt-connected to the power bus, a controllable short-circuit unit shunt-connected to the power converting device and placed in between this device and the power bus, a control unit connected to the short-circuit device, and a blocking device placed in between the short-circuit device and the power bus, with the blocking device consisting of exactly one blocking diode and the power supplying apparatus accommodating a protective device that offers means for detecting defects of the blocking diode, so that in case of a defective blocking diode the shorting of the short-circuit device during connection of the power supplying apparatus to the power bus can be prevented, plus a power bus in connection with at least one power supplying apparatus of the kind described.

### State of the art:

The invention relates to a power supplying apparatus according to the specifying features of Claim 1 and to a power bus according to the specifying features of Claim 8.

To supply the payload of a spacecraft, e.g. space probe or (communications) satellite, with electrical power, mainly power converting devices are used, particularly in case of long-term missions of more than 30 days, which use energy sources, e.g. the sun or a nuclear reactor, that cannot be regulated at all or can only be regulated to a small extent. A power converting device consists of several converters grouped together, such as e.g. photovoltaic, thermoelectric or thermionic converters, which constitute a section of a solar array or which constitute an entire solar array. Due to their physical characteristics, such converters are DC voltage sources. The electrical power generated by a power converting device is distributed to the loads, e.g. payload and flight control system, over a power bus installed in the spacecraft, with the individual loads being shunt-connected to the power bus. Depending on the mission scenario, the situation may occur that there is an imbalance between the electrical power generated by the power converting devices and the power demand of the payload, e.g. in the case of the spacecraft's flight path in low earth orbit (LEO) or at low inclination (i.e. when the spacecraft flies in the earth's shadow, which means that during this flight phase no electrical power is generated and supplied to the power bus), or in case of unsteady power demand of the payload. Because of the high power supply requirements of the payload, such as e.g. a constant voltage in the power bus, balancing becomes necessary. This balancing can be achieved by means of a buffer storage, especially a battery, whereby particularly in case of long-term missions, due to age-related decrease in performance of the converters at the beginning of the mission, the actual energy level clearly exceeds the required energy level, so that the buffer storage, especially when it is a battery, is in danger of being overloaded and thereby of experiencing a shorter life cycle or even of being destroyed. To solve this problem, several power converting devices are connected to the power bus independently of one another. If a power surplus occurs in the power bus, the power converting devices get separated individually from the power bus or get completely or partially short-circuited internally. If the power bus requires more power, the deactivated power converting devices must be connected to the power bus again, which produces strong impulse-like voltage peaks in the power bus. To prevent these voltage peaks, the power converting devices can be short-circuited by means of single controllable short-circuit units that are shunt-connected to each power converting device. To prevent the short-circuit units to draw current from the power bus when short-connected, each power converting device together with the pertinent short-circuit unit is separated from the power bus by a blocking device. The blocking device allows the current to flow only from the power converting device to the power bus, not from the power bus through the short-circuit unit, so that during connection voltage peaks can be kept from the payload. However, this arrangement involves the danger that during connection of a power supplying apparatus - consisting of a power converting device, a controllable short-circuit unit, a blocking device and a unit for controlling the short-circuit unit - which has a defective blocking device, an impulse-like sinking of the voltage in the power bus occurs, accompanied by a breakdown of the loads connected to the power bus. To avert this danger, it is state of the art to use redundant components that mutually support each other, i.e. to use a blocking device that consists of two series-connected blocking diodes, so that in case of one defective blocking diode a second blocking diode is available to secure the power bus with regard to discharge over a short-circuit unit when connected to a power supplying apparatus.
The disadvantage of this method is that the power supply to the power bus is done over two blocking diodes, with power dissipation occurring in form of heat at each blocking diode according to the physical law P=R·I², and this heat needs to be taken account of in the context of the spacecraft's thermal conditions by means of an accordingly dimensioned cooling device. A blocking device designed in such a way has an effectiveness of approximately 97 per cent. This means that 3 per cent of the electrical power flowing through the blocking device are transformed into heat. Moreover, this power dissipation must be taken into consideration with regard to the design of the entire power supplying facility, particularly with regard to the dimensioning of the solar array and its impact on the structural weight.

### Technical purpose of the invention:

The technical purpose of the invention is to develop a power supplying apparatus for supplying electrical power to the power bus of a spacecraft, which offers at least state-of-the-art operational reliability during connection to the power bus, and which at the same time, during the process of transmitting the electrical power from the power converting device to the power bus, has a higher effectiveness and produces a lower power dissipation, respectively, as well as to develop a power bus in connection with a power supplying apparatus of the kind described.

### Disclosure of the invention and its advantages:

The said power supplying apparatus with the identifying features of Claim 1 has an advantage over the state of the art, in that the blocking device consists of exactly one blocking diode facilitating current flow towards the power bus while at the same time blocking current flow towards the power converting device, and in that the power supplying apparatus accommodates a protective device connected to the short-circuit device and/or to the control unit, and in that this protective device accommodates means to detect a defect of the blocking diode, whereby in case of a defective blocking diode an activation of the short-circuit device (e.g. by interrupting the signal transmission from the control unit to the short-circuit device) can be prevented by means of the protective device, thereby preventing a shorting of the power converting device during connection of the power supplying apparatus to the power bus. In case of a defective blocking diode, shorting the power converting device during connection of the power supplying apparatus would be accompanied by a shorting of the power bus, which would lead to an impulse-like sinking of the voltage in the power bus, so that the spacecraft's payload would not be supplied with the necessary amount of electrical power anymore, leading to the situation where the spacecraft would not be capable anymore of fulfilling its mission as desired. The control unit of the short-circuit device is connected to the control device responsible for connecting/disconnecting the power supplying apparatus to/from the power bus, or, particularly in the case of a Sequential Switching Shunt Regulator, hereafter generally referred to as S3R, control, the control unit is part of this control device. Means for detecting a defect of the blocking diode may be a device for measuring the current intensity in the short-circuit device or a device for determining the current direction in the blocking diode. The said solution, using only one blocking diode and an appropriate safeguard by means of the protective device, offers a 1 per cent to two per cent increase in the effectiveness of supplying electrical power to a spacecraft's power bus, which would allow to accomplish a lower total weight of the spacecraft (while leaving the dimensioning of the payload unchanged, thus allowing to use a smaller and cheaper carrier rocket for the space transport), or which would allow to install a bigger payload in the spacecraft (while leaving the total weight unchanged). Both possibilities would yield cost savings for the operator of the spacecraft.
According to an advantageous embodiment of the invention, the protective device is an integral part of the control unit, so that in case of a defective blocking diode a signal (e.g. switching voltage) from the control unit to the short-circuit device for shorting the power converting device is not produced.

According to an advantageous embodiment of the invention, the protective device is an integral part of the short-circuit device, so that in case of a defective blocking diode, a signal (e.g. switching voltage) from the control unit to the short-circuit device for shorting the power converting device is not executed by the short-circuit device.

According to another advantageous embodiment of the invention, the connection between the control unit and the short-circuit device can be interrupted by the protective device, so that in case of a defective blocking diode, a signal (e.g. switching voltage) from the control unit to the short-circuit device for shorting the power converting device is not received by the short-circuit device.

According to another advantageous embodiment of the invention, the short-circuit device is a field effect transistor whose gate is connected to the control unit, so that by means of a switching voltage generated by the control unit at the gate, a current flow can be generated between the drain and the source of the field effect transistor for shorting the power converting device, whereby, for example, in case of a defective blocking diode, the connection between the control unit and the gate can be interrupted by the protective device.

According to another advantageous embodiment of the invention, the power converting device is a regenerative power converting device, generating electrical power directly or indirectly (e.g. over thermal energy) out of solar radiation.

According to a particularly advantageous embodiment of the invention, the power converting device is a section of a solar array which consists of several sections, and that this section is equipped with own electrical connectors.

The said power bus of a spacecraft in connection with at least one electrical load according to the specifying features of Claim 8 has the advantage over the state of the art, in that at least one power supplying apparatus for supplying electrical power to a spacecraft's power bus according to one of the Claims 1 to 7 can be connected to the power bus, with each power supplying apparatus having its power converting device and the short-circuit device shunt-connected to the load, with the power converting device and the short-circuit device separated from the power bus by exactly one blocking diode, so that the blocking diode prevents the flow of current from the power bus through the short-circuit device during connection of the power supplying apparatus to the power bus.

In case of a defective blocking diode, during connection of the power supplying device to the power bus, in the course of which the power converting device is to be shorted by the control unit in order to avoid impulse-like unsteadiness of the voltage in the power bus, the protective device detects the defect of the blocking diode, and shorting of the power converting device is prevented, by which an impulse-like sinking of the voltage in the power bus is prevented. The control unit of the short-circuit device is connected to the control device responsible for connecting/disconnecting the power supplying apparatus to/from the power bus, or, particularly in the case of an S3R control, the control unit is an integral part of this control device.

According to an advantageous embodiment of the said power bus, the control units for shorting the power converting devices of several power supplying apparatuses are grouped in a main control unit, which may be part of the control device responsible for connecting/disconnecting the power supplying apparatus to/from the power bus, particularly in the case of an S3R control.

According to another advantageous embodiment of the said power bus, the protective devices of several power supplying apparatuses are grouped in a main protective device.

According to another advantageous embodiment of the said power bus, the power bus accommodates at least one electrical-power buffer storage shunt-connected to the power supplying apparatus.

According to a particularly advantageous embodiment of the said power bus, the buffer storage is a reversible fuel cell.

According to another advantageous embodiment of the said power bus, the buffer storage is an electrochemical converter, preferably a battery.

According to an additional advantageous embodiment of the said power bus, the power bus accommodates at least one capacitive storage, preferably a capacitor, as an additional buffer storage, shunt-connected to at least one main buffer storage, preferably a battery, in order to compensate the voltage peaks during connection of a power supplying apparatus to the power bus.

It is to be noted that the document "Proceedings Of The Fifth European Space Power Conference" (1998), 1,79-84 describes a concrete example of prior art for the present invention. However, this known document discloses a different method for handling the case of single diode failure.

Brief description of the drawing, with:
- Figure 1: showing a circuit diagram of said power supplying apparatus including a blocking diode and including a protective device interrupting the signal transmission from the control unit to the short-circuit device, and
- Figure 2: showing a circuit diagram of a state-of-the-art power supplying apparatus including two series-connected blocking diodes.

Identical reference numbers in the figures denote identical elements or elements with identical functions.

### Paths for performing the invention:

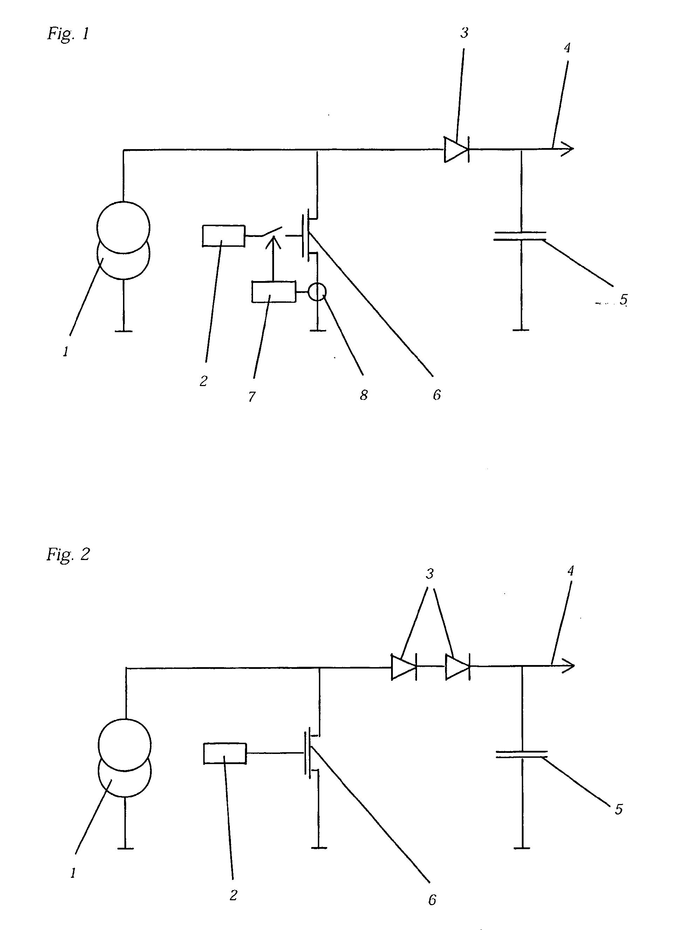

The said power supplying apparatus (as shown in Figure 1) for supplying electrical power to the power bus 4 of a spacecraft consists of a solar array section 1 functioning as a power converting device, a shunt-connected field effect transistor 6 functioning as a controllable short-circuit device, a blocking diode 3 functioning as a blocking device, a control unit 2 for controlling the field effect transistor 6, and a protective device 7 which is connected with a sensor 8 to detect a defect of the blocking diode 3. The control unit 2 is part of a Sequential Switching Shunt Regulator or S3R control that is responsible for connecting/disconnecting of power supplying apparatuses to/from the power bus 4. Shunt-connected to the solar array section 1 and the field effect transistor 6 of the power supplying apparatus, the power bus 4 accommodates a capacitor 5 for compensating voltage peaks during connection of the power supplying apparatus to the power bus 4. Connecting and disconnecting a power supplying apparatus to the power bus 4 of a spacecraft is a conventional method to match the amount of power supplied particularly by solar arrays to the power demand of the loads connected to the power bus 4 and to thereby provide the connected loads with a constant voltage in the power bus 4.
Responsible for connecting and disconnecting, respectively, is a S3R control (which is not further specified here), which, for example, identifies a power demand in the power bus 4 and connects single power supplying apparatuses, or which, for example, fully disconnects all solar arrays from the power bus 4 during the spacecraft's flight through the earth's shadow. The technical implementation of connecting and disconnecting single sections of a solar array is not further specified here; this process is executed, for example, by a S3R control device integrated in the power conditioning unit. This S3R control device communicates with the control unit 2, from which during connection of the power supplying apparatus a switching voltage at the gate of the field effect transistor 6 is laid, so that current can flow between the source and the drain of the field effect transistor 6, shorting the solar array section 1 during connection. The blocking diode 3 prevents current from flowing from the power bus 4 through the field effect transistor 6 during connection. The protective device 7 is able to detect a defect of the blocking diode 3 by means of the sensor 8, and, by interrupting the connection, to prevent the switching voltage from being transmitted from the control unit 2 to the gate of the field effect transistor 6, so that during connection of the power supplying apparatus to the power bus 4, also in case of a defective blocking diode 3, no current flow occurs from the power bus 4 through the field effect transistor 6.

Figure 2 shows a state-of-the-art power supplying apparatus, with two series-connected blocking diodes 3 in between the power supplying apparatus and the power bus 4, so that in case of defect of one blocking diode 3, during the connection of the power supplying apparatus to the power bus 4, the other blocking diode 3 prevents current from flowing from the power bus 4 through the field effect transistor 6. When the electrical power generated in the solar array section 1 is supplied, in each diode power dissipation occurs in form of heat. By realizing said invention in terms of the design as shown in Figure 1, power dissipation can be reduced by half, and an approx. 1 per cent to 2 per cent increase in the effectiveness of the entire power supplying apparatus can be achieved.

Further advantages, peculiarities and useful modifications of the invention arise from further sub-claims or from the combination of the sub-claims.

### Commercial applicability:

The invention is commercially applicable particularly in the field of producing and operating satellites.

### List of reference numbers

- 1: solar array section
- 2: control unit
- 3: blocking diode
- 4: power bus
- 5: capacitor
- 6: field effect transistor
- 7: protective device
- 8: sensor

## Claims

1. A power supplying apparatus for supplying electrical power to the power bus (4) of a spacecraft, comprising at least one power converting device (1), a controllable short-circuit unit (6) shunt-connected to the power converting device (1) and placed in between this device and the power bus (4), a control unit (2) connected to the short-circuit device (6), plus a blocking device (3) placed in between the short-circuit device (6) and the power bus (4), **characterized in that** the blocking device (3) consists of exactly one blocking diode (3) and **in that** the power supplying apparatus accommodates a protective device (7) that offers means (8) for detecting defects of the blocking diode (3), whereby an activation of the short-circuit device (6) can be prevented by the protective device (7).

2. A power supplying apparatus according to Claim 1, **characterized in that** the protective device (7) is an integral part of the control unit (2).

3. A power supplying apparatus according to Claim 1, **characterized in that** the protective device (7) is an integral part of the short-circuit device (6).

4. A power supplying apparatus according to Claim 1, **characterized in that** the connection between the control unit (2) and the short-circuit device (6) can be interrupted by the protective device (7).

5. A power supplying apparatus according to one of the Claims 1, 2 or 4, **characterized in that** the short-circuit device (6) is a field effect transistor (6) whose gate is connected to the control unit (2), so that by means of a switching voltage generated at the gate by the control unit (2), a current flow can be generated between the drain and the source of the field effect transistor (6) for shorting the power converting device (1).

6. A power supplying apparatus according to one of the previous claims, **characterized in that** the power converting device (1) is a regenerative power converting device (1), generating electrical power directly or indirectly out of solar radiation.

7. A power supplying apparatus according to one of the previous claims, **characterized in that** the power converting device (1) is a section of a solar array (1) which consists of several sections.

8. A power supplying apparatus according to claim 1, **characterized in that** said power bus (4) is common for several power supplying apparatuses, and **in that** an electrical load is connected to this common power bus, each power supplying apparatus having its power converting device (1) and the short-circuit device (6) shunt-connected to the load, with the power converting device and the short-circuit device (6) separated from the power bus by exactly one blocking diode (3).

9. A power supplying apparatus according to Claim 8, **characterized in that** the control units (2) of several power supplying apparatuses are grouped in a main control unit.

10. A power supplying apparatus according to Claims 8 or 9, **characterized in that** the protective devices (7) of several power supplying apparatuses are grouped in a main protective device.

11. A power supplying apparatus according to Claims 8, 9 or 10, **characterized in that** the power bus (4) accommodates at least one electrical-power buffer storage (5) shunt-connected to the power supplying apparatus.

12. A power (4) supplying apparatus according to claim 11, **characterized in that** the buffer storage (5) is a reversible fuel cell.

13. A power supplying apparatus according to claim 11, **characterized in that** the buffer storage (5) is an electrochemical converter.

14. A power supplying apparatus according to one of the Claims 8 to 13, **characterized in that** the power bus (4) accommodates at least one capacitive storage (5) as an additional buffer storage (5) shunt-connected to at least one main buffer storage (5).

## Patentansprüche

1. Stromversorgungsvorrichtung zum Zuführen von elektrischem Strom zu der Hauptsammelschiene (4) eines Raumschiffes, die Folgendes umfasst:
mindestens eine Leistungswandlervorrichtung (1), eine steuerbare Kurzschlusseinheit (6), die zu der Leistungswandlervorrichtung (1) parallel geschaltet ist und zwischen dieser Vorrichtung und der Hauptsammelschiene (4) angeordnet ist, eine Steuereinheit (2), die mit der Kurzschlussvorrichtung (6) verbunden ist, und eine Sperrvorrichtung (3), die zwischen der Kurzschlussvorrichtung (6) und der Hauptsammelschiene (4) angeordnet ist, **dadurch gekennzeichnet, dass** die Sperrvorrichtung (3) aus genau einer Sperrdiode (3) besteht und dass die Stromversorgungsvorrichtung eine Schutzvorrichtung (7) beherbergt, die ein Mittel (8) zum Erkennen von Defekten der Sperrdiode (3) darstellt, wobei eine Aktivierung der Kurzschlussvorrichtung (6) durch die Schutzvorrichtung (7) verhindert werden kann.

2. Stromversorgungsvorrichtung nach Anspruch 1, **dadurch gekennzeichnet, dass** die Schutzvorrichtung (7) ein integraler Teil der Steuereinheit (2) ist.

3. Stromversorgungsvorrichtung nach Anspruch 1, **dadurch gekennzeichnet, dass** die Schutzvorrichtung (7) ein integraler Teil der Kurzschlussvorrichtung (6) ist.

4. Stromversorgungsvorrichtung nach Anspruch 1, **dadurch gekennzeichnet, dass** die Verbindung zwischen der Steuereinheit (2) und der Kurzschlussvorrichtung (6) durch die Schutzvorrichtung (7) unterbrochen werden kann.

5. Stromversorgungsvorrichtung nach einem der Ansprüche 1, 2 oder 4, **dadurch gekennzeichnet, dass** die Kurzschlussvorrichtung (6) ein Feldeffekttransistor (6) ist, dessen Gatterelektrode mit der Steuereinheit (2) verbunden ist, so dass mittels einer Schaltspannung, die an der Gatterelektrode durch die Steuereinheit (2) erzeugt wird, ein Stromfluss zwischen der Abzugselektrode und der Quellenelektrode des Feldeffekttransistors (6) erzeugt werden kann, um die Leistungswandlervorrichtung (1) kurzzuschließen.

6. Stromversorgungsvorrichtung nach einem der vorangehenden Ansprüche, **dadurch gekennzeichnet, dass** die Leistungswandlervorrichtung (1) eine regenerative Leistungswandlervorrichtung (1) ist, die elektrischen Strom direkt oder indirekt aus Sonnenstrahlung erzeugt.

7. Stromversorgungsvorrichtung nach einem der vorangehenden Ansprüche, **dadurch gekennzeichnet, dass** die Leistungswandlervorrichtung (1) eine Sektion eines Solararrays (1) ist, das aus mehreren Sektionen besteht.

8. Stromversorgungsvorrichtung nach Anspruch 1, **dadurch gekennzeichnet, dass** die Hauptsammelschiene (4) für mehrere Stromversorgungsvorrichtungen gemeinsam vorgesehen ist und dass ein elektrischer Verbraucher an diese gemeinsame Hauptsammelschiene angeschlossen ist, wobei jede Stromversorgungsvorrichtung ihre Leistungswandlervorrichtung (1) und die mit dem Verbraucher parallel geschaltete Kurzschlussvorrichtung (6) hat, wobei die Leistungswandlervorrichtung und die Kurzschlussvorrichtung (6) durch genau eine Sperrdiode (3) von der Hauptsammelschiene getrennt sind.

9. Stromversorgungsvorrichtung nach Anspruch 8, **dadurch gekennzeichnet, dass** die Steuereinheiten (2) mehrerer Stromversorgungsvorrichtungen in einer Hauptsteuereinheit gruppiert sind.

10. Stromversorgungsvorrichtung nach den Ansprüchen 8 oder 9, **dadurch gekennzeichnet, dass** die Schutzvorrichtungen (7) mehrerer Stromversorgungsvorrichtungen in einer Hauptschutzvorrichtung gruppiert sind.

11. Stromversorgungsvorrichtung nach den Ansprüchen 8, 9 oder 10, **dadurch gekennzeichnet, dass** die Hauptsammelschiene (4) mindestens einen Strompufferspeicher (5) beherbergt, der mit der Stromversorgungsvorrichtung parallel geschaltet ist.

12. Stromversorgungsvorrichtung nach Anspruch 11, **dadurch gekennzeichnet, dass** der Pufferspeicher (5) eine umkehrbare Brennstoffzelle ist.

13. Stromversorgungsvorrichtung nach Anspruch 11, **dadurch gekennzeichnet, dass** der Pufferspeicher (5) ein elektrochemischer Konverter ist.

14. Stromversorgungsvorrichtung nach einem der Ansprüche 8 bis 13, **dadurch gekennzeichnet, dass** die Hauptsammelschiene (4) mindestens einen kapazitiven Speicher (5) als einen zusätzlichen Pufferspeicher (5) beherbergt, der mit mindestens einem Hauptpufferspeicher (5) parallel geschaltet ist.

## Revendications

1. Appareil d'alimentation de puissance pour alimenter en puissance électrique un bus de puissance (4) d'un engin spatial, comprenant au moins un dispositif de conversion de puissance (1), un module de court-circuit contrôlable (6) connecté en parallèle au dispositif de conversion de puissance (1) et placé entre ce dispositif et le bus de puissance (4), un module de commande (2) connecté au module de court-circuit (6), plus un dispositif de blocage (3) placé entre le dispositif de court-circuit (6) et le bus de puissance (4), **caractérisé en ce que** le dispositif de blocage (3) est constitué exactement d'une seule diode de blocage (3) et **en ce que** l'appareil d'alimentation de puissance abrite un dispositif de protection (7) qui offre un moyen (8) de détection de défauts de la diode de blocage (3), une activation du dispositif de court-circuit (6) pouvant ainsi être empêchée par le dispositif de protection (7).

2. Appareil d'alimentation de puissance selon la revendication 1, **caractérisé en ce que** le dispositif de protection (7) fait partie intégrante du module de commande (2).

3. Appareil d'alimentation de puissance selon la revendication 1, **caractérisé en ce que** le dispositif de protection (7) fait partie intégrante du dispositif de court-circuit (6).

4. Appareil d'alimentation de puissance selon la revendication 1, **caractérisé en ce que** la connexion entre le module de commande (2) et le dispositif de court-circuit (6) peut être interrompue par le dispositif de protection (7).

5. Appareil d'alimentation de puissance selon l'une quelconque des revendications 1, 2 ou 4, **caractérisé en ce que** le dispositif de court-circuit (6) est un transistor à effet de champ (6) dont la grille est connectée au module de commande (2), de telle sorte qu'au moyen d'une tension de commutation générée au niveau de la grille par le module de commande (2), un flux de courant puisse être généré entre le drain et la source du transistor à effet de champ (6) pour court-circuiter le dispositif de conversion de puissance (1).

6. Appareil d'alimentation de puissance selon l'une quelconque des revendications précédentes, **caractérisé en ce que** le dispositif de conversion de puissance (1) est un dispositif de conversion de puissance régénérateur (1), lequel génère une puissance électrique directement ou indirectement à partir du rayonnement solaire.

7. Appareil d'alimentation de puissance selon l'une quelconque des revendications précédentes, **caractérisé en ce que** le dispositif de conversion de puissance (1) est une section d'un panneau solaire (1) qui consiste en plusieurs sections.

8. Appareil d'alimentation de puissance selon la revendication 1, **caractérisé en ce que** ledit bus de puissance (4) est commun à plusieurs appareils d'alimentation de puissance, et **en ce qu'**une charge électrique est connectée à ce bus de puissance commun, chaque appareil d'alimentation de puissance ayant son dispositif de conversion de puissance (1) et le dispositif de court-circuit (6) connectés en parallèle à la charge, le dispositif de conversion de puissance et le dispositif de court-circuit (6) étant séparés du bus de puissance par exactement une seule diode de blocage (3).

9. Appareil d'alimentation de puissance selon la revendication 8, **caractérisé en ce que** les modules de commande (2) de plusieurs appareils d'alimentation de puissance sont groupés dans un module de puissance principal.

10. Appareil d'alimentation de puissance selon la revendication 8 ou 9, **caractérisé en ce que** les dispositifs de protection (7) de plusieurs appareils d'alimentation de puissance sont groupés dans un dispositif de protection principal.

11. Appareil d'alimentation de puissance selon la revendication 8, 9 ou 10, **caractérisé en ce que** le bus de puissance (4) abrite au moins un dispositif de stockage tampon de puissance électrique (5) connecté en parallèle à l'appareil d'alimentation de puissance.

12. Appareil d'alimentation de puissance selon la revendication 11, **caractérisé en ce que** le dispositif de stockage tampon (5) est une pile à combustible réversible.

13. Appareil d'alimentation de puissance selon la revendication 11, **caractérisé en ce que** le dispositif de stockage tampon (5) est un convertisseur électrochimique.

14. Appareil d'alimentation de puissance selon l'une quelconque des revendications 8 à 13, **caractérisé en ce que** le bus de puissance (4) abrite au moins un dispositif de stockage capacitif (5) comme dispositif de stockage tampon supplémentaire (5) connecté en parallèle à au moins un dispositif de stockage tampon principal (5).
